# EUROPEAN PATENT SPECIFICATION

(11) **EP 4 530 056 B1**
(45) Date of publication and mention of the grant of the patent: **11.02.2026**
(21) Application number: 24203293.6
(22) Date of filing: 27.09.2024
(51) Int. Cl.: B29D 35/00, B29D 35/12, A43D 3/02

(54) **MOLD FOR THE PRODUCTION, IN PARTICULAR FOR INJECTION OR VULCANIZATION MOULDING, OF AN OUTER SHELL OF A SKI BOOT**
FORM ZUR HERSTELLUNG, INSBESONDERE ZUM SPRITZGUSS ODER VULKANISIERGUSS, EINER AUSSENSCHALE EINES SKISCHUHES
MOULE POUR LA FABRICATION, NOTAMMENT POUR LE MOULAGE PAR INJECTION OU VULCANISATION, D'UNE COQUE EXTERNE D'UNE CHAUSSURE DE SKI

(30) Priority: 28.09.2023 IT 202300020028
(43) Date of publication of application: 02.04.2025
(73) Proprietor: FMB S.R.L., 31041 Cornuda TV (IT)
(72) Inventor: BUZIOL, Renato, 31035 Crocetta del Montello (Treviso) (IT)
(74) Representative: Feltrinelli, Secondo Andrea

(56) References cited:
- DE-A1- 1 950 826
- IT-A1- 201700 099 963

## Description

### TECHNICAL FIELD OF THE INVENTION

The present invention relates to a mold for the production, in particular for injection or vulcanization moulding, of an outer shell of a ski boot and related method.

### STATE OF THE PRIOR ART

To date, many solutions have been proposed for molding outer shells of ski boots.

Thus, for example, the Italian patent obtained from the Italian patent application no. 102017000099963 concerns a mold and a method for obtaining a ski boot or rather the outer shell of a ski boot.

More specifically, this mold comprises an internal core and an external shell having two portions movable with respect to each other, these components being shaped so as to define together a gap that has the desired shape for the shell and inside which plastic material in the molten state can be injected to obtain the boot.

Moreover, the inner core is made up of two portions that are movable or sliding relative to each other, so as to pass, through the intervention of respective actuators, between a first configuration, in which the portions of the inner core are arranged so as to define a shape that reproduces the internal volume of the shell, to a second configuration, in which the extraction of the portions of the inner core from such shell is facilitated.

Another prior solution is taught by DE1950826A1, which is a German patent application, that concerns a mold for the production of a ski boot by injection or vulcanization.

This mold provides an external shell in two parts as well as an internal core.

### OBJECTS OF THE INVENTION

An object of the present invention is to provide a new mold for the production of an outer shell of a ski boot.

Another object of the present invention is to provide a new mold as indicated above, in which the position of the components during molding is ensured in a simple and effective manner, even in the face of high specific pressures.

Another object of the present invention is to provide a mold as above indicated, with large interference between the core and the outer shells.

Another object of the present invention is to provide a mold as proposed above, in which it is possible to easily and quickly remove the outer shell once molded from the inner core of the mold.

Another object of the present invention is to provide a new method for the production, in particular by injection molding or vulcanization, of an outer shell of a ski boot.

According to one aspect of the invention, a mold according to claim 1 is provided.

According to another aspect of the invention, a method according to claim 17 is provided.

The dependent claims refer to preferred and advantageous embodiments of the invention.

### BRIEF DESCRIPTION OF THE DRAWINGS

Other features and advantages of the invention will be more evident from the description of embodiments of a mold, illustrated for illustrative purposes in the attached drawings in which:
- figures 1 and 2 illustrate a mold according to the present invention in a closed and open or removed position, respectively,
- figures 3 and 4 are views from a first side of a core or internal component of a mold according to the present invention with the respective beam component in the molding position and in the extraction or disinsertion position, respectively,
- figures 5 and 6 are views from a second side of a core or internal component of a mold according to the present invention with the respective beam component in the molding position and in the extraction or disinsertion position, respectively,
- figures 7 and 8 are perspective views of a core or internal component of a mold according to the present invention with the respective beam component in the molding position and in the extraction or disinsertion position, respectively,
- figures 9 and 10 are perspective views from respective sides of a second part of a core or internal component of a mold according to the present invention,
- figures 11 and 12 are perspective views from respective sides of a portion of a first part of a core or internal component of a mold according to the present invention,
- figures 13 and 14 show the inside of two external shells of a mold according to the present invention.

In the attached drawings, identical parts or components are identified by the same reference numbers.

### EMBODIMENTS OF THE INVENTION

The present invention relates to a mold 1 for the production, in particular for injection or vulcanization moulding, of an outer shell of a ski boot, comprising a core or internal component 2 having a molding portion 3 and a constraint portion 4, the mold further including at least two external shells 5, 6, 7.

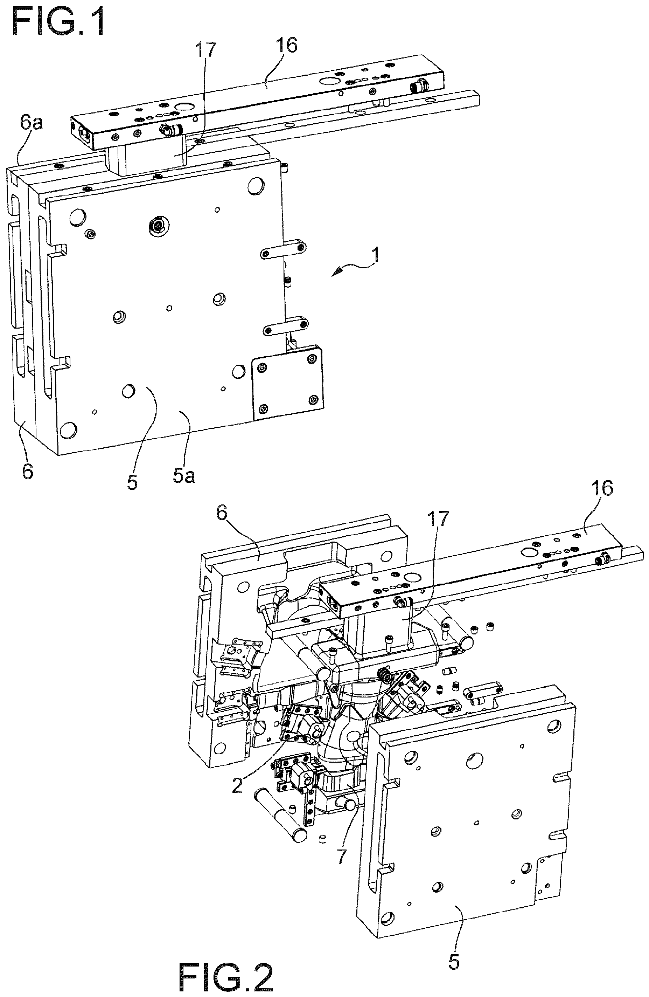

The mold then comprises means for approaching/removing the external shells 5, 6, 7, between
at least one closed position (see figure 1), in which the external shells 5, 6, 7 surround the entire molding portion 3 and at least part of the constraint portion 4 of the core or internal component 2, in such a way as to engage the constraint portion 4 and define with an external surface 3a of the molding portion 3 a gap or impression for molding a compound or mixture, for example a polymeric material or other suitable material to obtain an outer shell of a ski boot, and
at least one opening or removing position (see figure 1), in which it is possible to decouple from the core or internal component 2 an outer shell molded in the molding gap or impression.

The gap or molding impression has any suitable width, for example between 0.1 mm and 1 cm or even different, depending on the thickness of an outer shell of a ski boot.

The means of approaching/removing can comprise one or more electric, hydraulic or oleodynamic actuators and can be used to move one or more of the outer shells 5, 6, 7 alternatively towards or away from each other and from the core or internal component 2.

As regards in detail the molding portion 3, it has an external surface 3a configured as the inside of an outer shell of a ski boot, and then has a back 3b, a tip or front 3c, a top 3d, a bottom 3e and sides 3f, 3g corresponding, respectively, to the internal surface of the back, tip, top, bottom and sides of an outer shell of a ski boot to be molded on the molding portion 3 and in the gap or impression.

Thus, for example, the bottom 3e could be substantially flat or even with a configuration having a step to simulate the bottom of a boot with a heel protruding downwards.

The top 3d could be flat or follow a curved path, if desired with a lower section or section closer to the bottom on the back and a higher section or section further from the bottom on the front or tip.

A section could also be provided, in a plane orthogonal to the back 3b-front 3c direction, tapered as it approaches the tip or front 3c.

The molding portion 3 approaching the constraint portion 4 could have a section, in a plane orthogonal to the top 3d-bottom 3e direction, first decreasing and then increasing with a substantially flared external surface, this last part of the section corresponding to the upper part of an external shell of a ski boot.

The constraint portion 4 instead has, moving away from the molding portion 3, at least one section of continuation of the shape of the molding portion 3 or at least one section of connection or intermediate 8 and then at least one section protruding or recessed 9 with respect to the section of continuation of the shape or connection or intermediate section 8.

Moreover, the core or internal component 2 comprises at least two mutually movable parts (hereinafter also referred to as "movable parts") 10, 11 or movable with respect to each other, that is to say at least one first 10 and one second 11 part. To better explain, the molding portion 3 and the constraint portion 4 each have a section or segment or sector belonging to the first part 10 and each a section or segment or sector belonging to the second part 11.

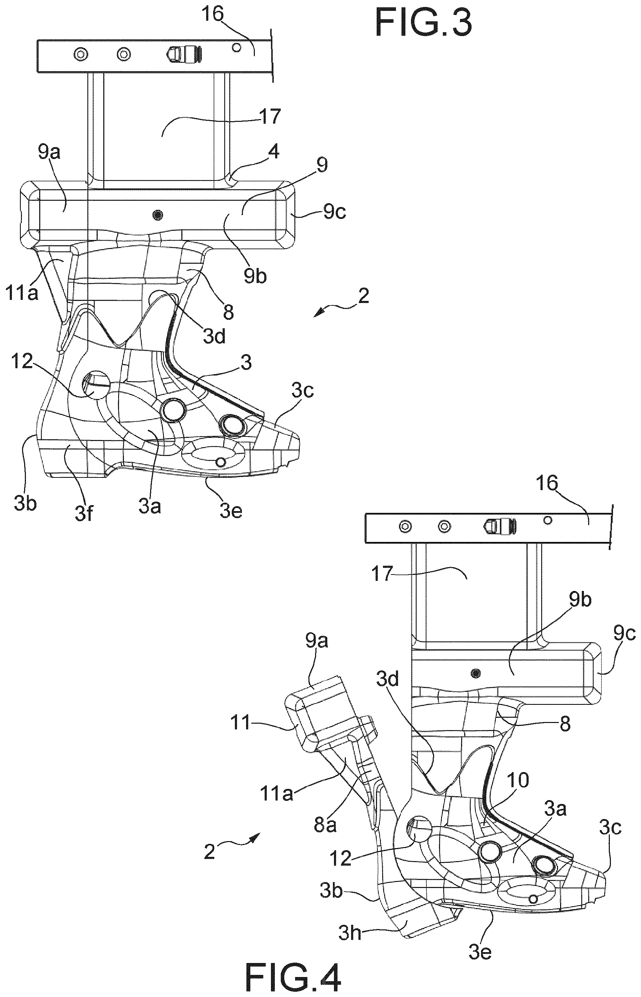

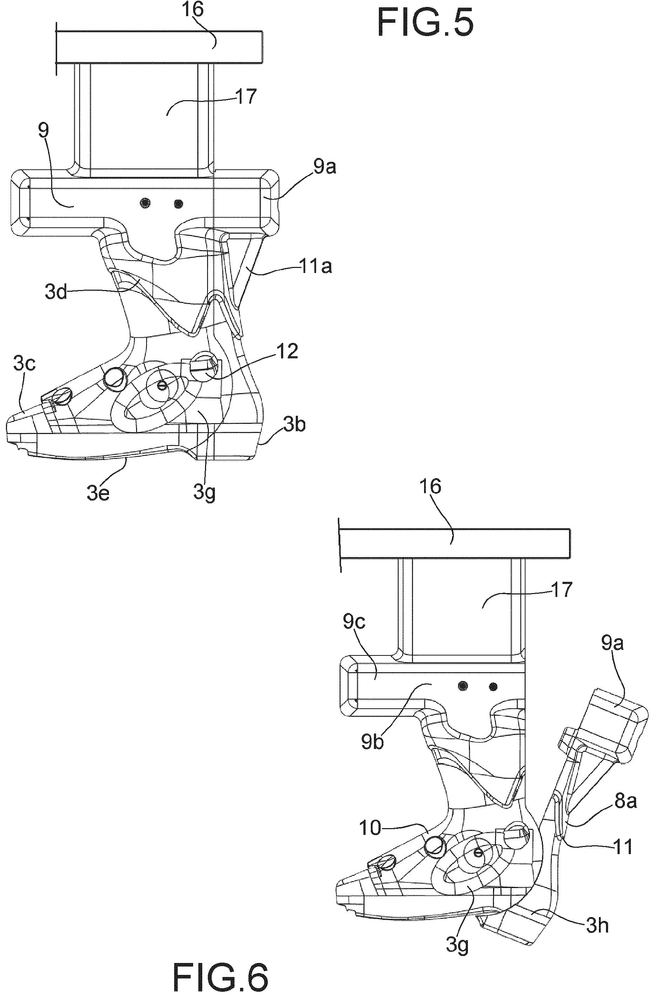

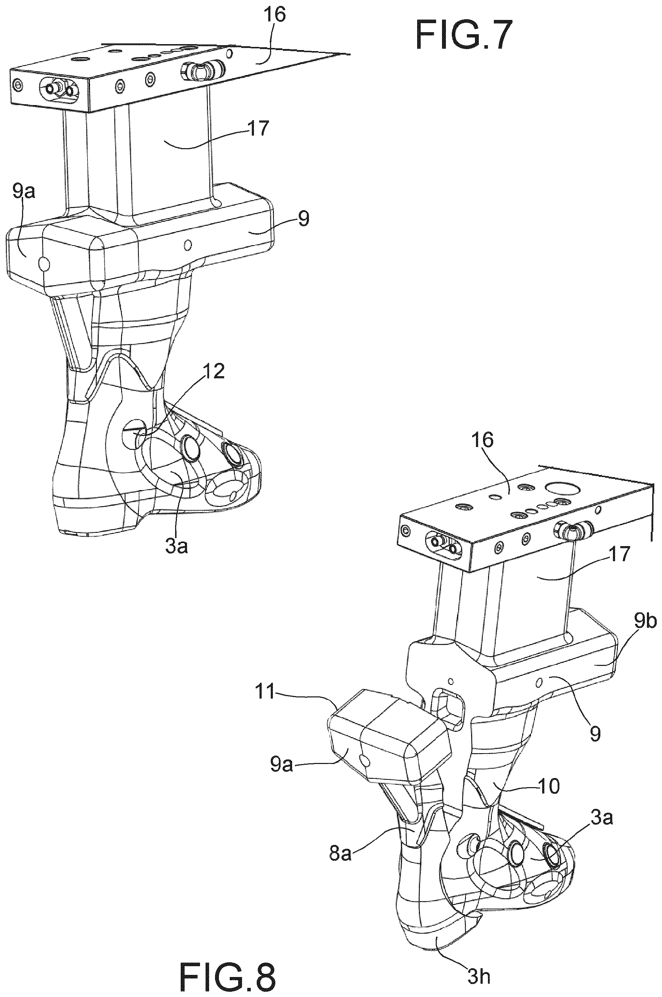

More in detail, the two parts 10, 11 are mutually movable between
a molding position (see figures 3, 5 and 7), in which the external faces of the at least two mutually movable parts 10, 11 are aligned or in any case arranged so as to define the external surface 3a configured as the inside of an outer shell of a ski boot to be molded, and
a position of extraction or disinsertion from the core or internal component 2 of an outer shell molded into the molding gap or impression GI.

In the position of extraction or disinsertion, the two parts 10, 11 are displaced with respect to each other relative to the molding position, so that their external faces are misaligned or in any case arranged so as to no longer define the external surface configured as the inside of an outer shell of a ski boot to be moulded.

The second part 11 extends 3h on the back 3b of the moulding portion 3 from the bottom 3e to the top 3d (with reference to the moulding position) of the latter and continues 8a then in the at least one section of continuation of the shape or connection or intermediate 8, ending 9a in at least part of the at least one protruding or recessed section 9.

The second part 11 then comprises a segment or sector 3h of the moulding portion 3, a segment or sector 8a of the section of continuation of the shape or connection or intermediate 8 and a segment or sector 9a of the at least one protruding or recessed section 9.

The second part 11 is advantageously in a single piece or unique piece, being for example, by way of example and not as a limitation, made of steel or other suitable material.

The first part 10 comprises the other parts of the molding portion 3 and the constraint portion 4. The first part 10 is preferably in a single piece or enbloc, being for example, purely indicative and not limitative, made of aluminum or other suitable material, although a movable tip could be provided or in any case a tip configured for example as described in the European patent EP3326483B1 could be provided.

It is also noted that at least one or, preferably two or more of the external shells 5, 6, 7 engages/are, i.e. is inserted/are engaged/are in shape or in contact, in whole or in part, in the closed position the at least one protruding or recessed portion 9, preferably a sector or piece 9a of the same belonging to the second part 11 and, if desired, also a portion of the same belonging to the first part 10.

This engagement ensures, alone or with other arrangements or configurations of the components of the mold, among other things the removable locking of the mobile parts 10, 11 in the molding position and, as will also be said later, it can also facilitate or complete the reciprocal return of the two parts 10, 11 towards the molding position starting from the extraction or disinsertion position.

Preferably, at least one or, preferably two or more of the external shells 5, 6, 7 engages/engage in the closed position, that is to say they fit or engage in shape or in contact, in whole or in part, also the at least one section of continuation of the shape or connection or intermediate 8, even more preferably a sector or piece 8a of the same belonging to the second part 11 and/or a portion of the same belonging to the first part 10.

This engagement also contributes to the removable locking of the movable parts 10, 11 in the correct molding position and, if desired, to complete or facilitate the mutual return of the two parts 10, 11 towards the molding position starting from the extraction or disinsertion position.

Advantageously, the mutually movable parts 10, 11 are hinged to each other around a pivot pin 12, so that the second part 11 is movable with respect to the other 10 or other parts according to a curved or curvilinear direction around the pivot pin 12. The pivot pin 12 is preferably arranged in a direction parallel to the direction from one side 3f to the other 3g of the molding portion 3.

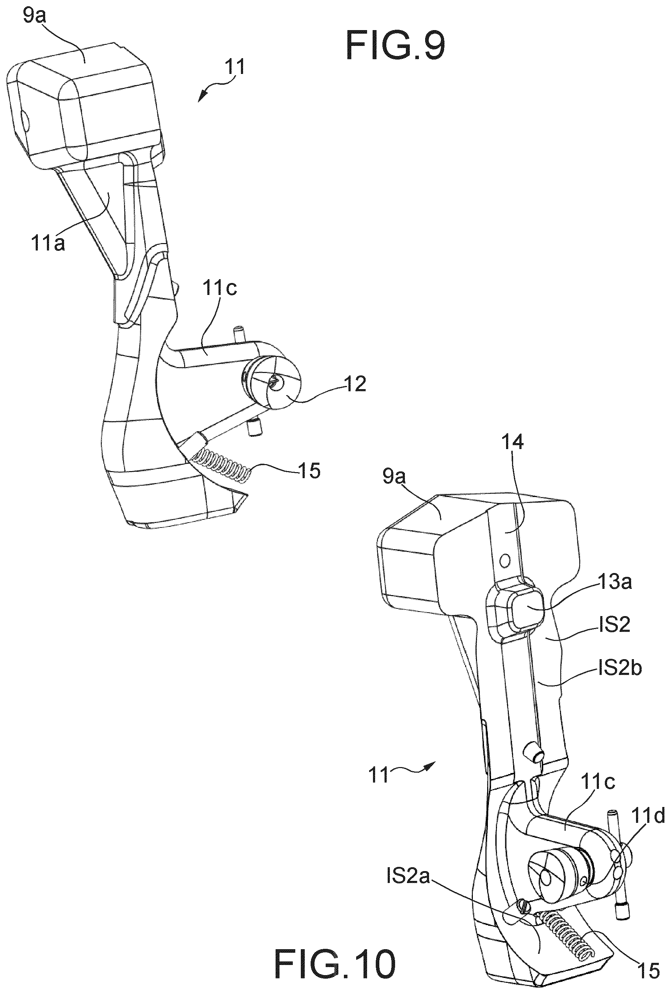

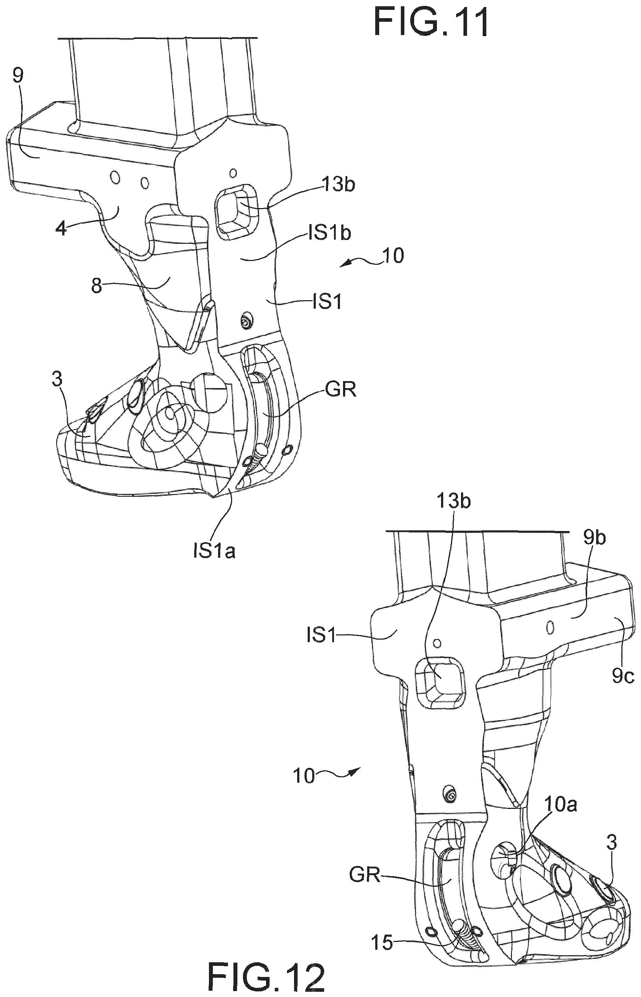

With reference to this aspect, the second part 11 may comprise a protruding fin or wall 11c (see figures 9 and 12) towards the inside of the molding portion 3, which is designed to be inserted, preferably loosely, into a groove GR delimited by the first part 10. In this case, the pivot pin 12 is inserted or fitted in a through hole or opening 11d delimited in the protruding fin or wall 11c and in one or more holes or openings 10a, if desired through, which is or are delimited in the first part 10 and which is or are aligned with the hole or opening 11d.

Clearly, the groove GR must have a configuration such as to allow the protruding fin or wall 11c to move inside it during the mutual movement of the first part 10 and second part 11.

Of course, a fin could also be provided in the first part 10 to be engaged in a groove of the second part 11 or another configuration for the pivoting engagement between the mutually movable parts.

The pivot pin 12 is advantageously provided housed in the molding portion 3, for example at the back 3b of the molding portion 3 at an intermediate level between the bottom 3e and the top 3d of the same.

If desired, the interface or coupling surface IS1, IS2 (not considering any fin and groove described above) of each of the at least two mutually movable parts 10, 11 with the other or others parts 11, 10 has a curved or curvilinear segment IS1a, IS2a, with a concavity preferably towards the tip or front 3c, at the molding portion 3 and then in the constraint portion 4 a substantially rectilinear section IS1b, IS2b or in any case with a direction, in the molding position, of main extension substantially parallel to the direction from the top 3d to the bottom 3e. In this case, the substantially rectilinear section IS1b, IS2b could also extend in part, at an initial segment or segment of connection with the curved or curvilinear segment IS1a, IS2a, in the molding portion 3 (see figures 9 to 12).

The interface or coupling surfaces IS1, IS2 or rather the zone between them reaches or is open towards the sides 3f, 3g as well as, downwards in the figures, at the bottom 3e of the molding portion 3. Preferably, the interface or coupling surfaces IS1, IS2 or rather the zone between them also opens, upwards in the figures, at the protruding or recessed section 9.

The at least one protruding or recessed section 9 can be, for example, protruding in the rear 3b-front 3c direction with respect to the section of continuation of the shape or connection or intermediate section 8, or even with a larger section, if desired between 1.1 and 5 times, if desired between 2 and 3 times, than the latter in a plane orthogonal to the bottom 3e-top 3d direction.

According to the non-limiting embodiment illustrated in the figures, the protruding section 9 is configured substantially as a strip or polyhedron in the molding position, while the second part 11 comprises a segment 9a, in particular an end segment, of the strip or polyhedron, so that in the extraction or disinsertion position, the segment 9a of the strip or polyhedron is misaligned or in any case staggered or shifted with respect to the remaining portion 9b of the strip or polyhedron.

Advantageously, the protruding or recessed section 9 is configured substantially as a polyhedron with a main dimension greater than the others in a direction parallel to the front 3c-back 3b direction.

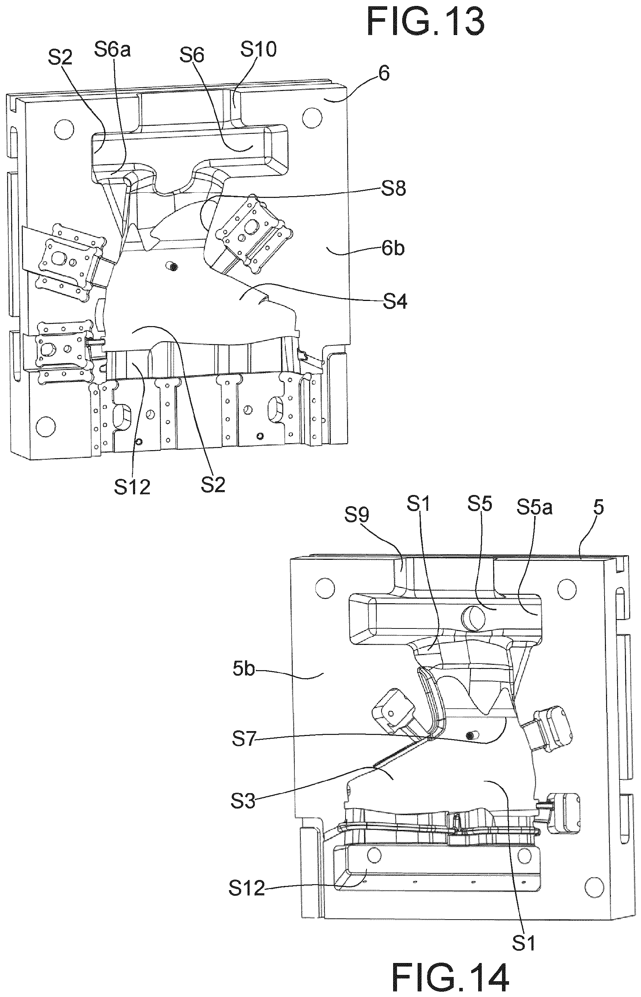

Even more advantageously, the protruding or recessed section 9 is configured as a parallelepiped or prism, if desired with hexagonal bases, while the second part 11 comprises a first segment 9a of the protruding or recessed section 9 protruding with respect to the section of continuation of the shape or of connection or intermediate 8 in the front 3c-back 3b direction and with direction starting from the section of continuation of the shape or of connection or intermediate from the front 3c to the back 3b. The first segment 9a can be engaged, by means of a fitting or a shape or contact engagement, in whole or in part, in the closed position in part of a recessed zone or shape S1, S2 (see figures 13 and 14) delimited by one or both or more of the external shells 5, 6, 7.

With reference instead to the remaining portion 9b of the protruding or recessed section 9, which belongs to the first part 10, it could also include a second segment 9c of the protruding or recessed section protruding with respect to the section of continuation of the shape or connection or intermediate 8 in the direction from the front 3c-back 3b and with direction starting from the section of continuation of the shape or connection or intermediate from the back 3b to the front 3b.

In essence, the protruding or recessed section 9 could include a segment or sector 9a protruding towards the back with respect to the section of continuation of the shape or connection or intermediate 8 or two 9a, 9c segments protruding one towards the back and the other towards the front with respect to the section of continuation of the shape or connection or intermediate 8.

Alternatively, the protruding or recessed section 9 could comprise one or more recesses or hollow areas that can be engaged, by means of a shape fitting or engagement or engagement by contact, in whole or in part, in the closed position by a respective raised area of one or both or more of the external shells 5, 6, 7.

If desired, the second part 11 comprises a reinforcing segment or gusset 11a that extends between a respective segment 8a in the at least one segment of continuation of the shape or of connection or intermediate 8 and a respective segment 9a in the at least one protruding or recessed section 9.

With specific reference now to the segment of continuation of the shape or of connection or intermediate 8, it could have any suitable configuration. According to the non-limiting embodiment illustrated in the figures, it constitutes the continuation of the shape of the molding portion 3, that is to say that the section, in a plane orthogonal to the top 3d-bottom 3e direction, of the constraint portion 4 moving away from the moulding portion 3, is increasing with a substantially flared external surface.

Furthermore, one or more relief or recessed areas 14 may be provided on one or both of the interface or coupling surfaces IS2, IS1, such area or areas 14 being provided to reduce the contact area between the parts 10 and 11 when in the closed position.

The mold 1 may then comprise interference or mechanical engagement means 13a, 13b (see figures 10, 11 and 12) of the at least two mutually movable parts 10, 11 formed at the interface or coupling surfaces IS1, IS2.

According to the non-limiting embodiment illustrated in the figures, the possible means of interference or mechanical engagement comprise at least one projection 13a in the first 10 or second 11 part which is wholly or partly partially conical or tapered moving away from the respective first 10 or second 11 part or better from a respective interface or coupling surface IS1, IS2, the at least one projection 13a being designed to engage, in the molding position, a respective seat 13b in the other second 11 or first 10 part starting from a respective interface or coupling surface IS2, IS1, which seat 13b is partially conical or with a section decreasing towards the inside of the respective second 11 or first 10 part.

The engagement in the closed position, between the projection 13a and the seat 13b could be by shape or contact along the entire surface of the projection 13a or even only at part of this surface, in which case, in the closed position, non-contact or non-interference zones would be provided.

If desired, the mold 1 comprises at least one elastic loading element 15 (shown for clarity of positioning both in figures 9 and 10, and in figures 11 and 12), such as for example a spring or the like, designed to oppose the relative movement of the mutually movable parts 10, 11 from the molding position to the extraction or disinsertion position and designed to act so as to bring the movable parts 10, 11 back to or towards the molding position.

The at least one elastic loading element 15 is designed to bring the at least two movable parts 10, 11 towards the molding position or in the vicinity of the same starting from the extraction or disinsertion position, but the completion of the movement from the extraction or disinsertion position to the molding position or in any case the removable locking of the movable parts 10, 11 in the moulding position is preferably carried out by the engagement, if desired by shape or by fitting, in whole or in part, of at least one or two or more of the at least two external shells 5, 6, 7 with the at least one protruding or recessed section 9 or with a respective segment or sector 9a.

The elastic loading element 15, such as a spring, for example a helical spring, has one end or section constrained or connected or integral with the first part 10 and another end or section constrained or connected or integral with the second part 11. With reference to the non-limiting embodiment illustrated in the figures, the spring 15 has one end or section constrained or connected or integral within the groove GR delimited by the first part 10 and another end or section constrained or connected or integral with the protruding fin or wall 11c of the second part 11.

The mold 1 can or cannot include actuators for moving the at least two movable parts 10, 11 with respect to each other.

If such an actuator is provided, it is preferably designed to act directly or by means of a respective lever or pusher component against the back of the second part 11. Clearly, such an actuator could act in proximity to the external shells 5, 6, 7 or far from them, in a zone where the core or internal component 2 is brought after molding and after the opening or removal of the external shells 5, 6, 7.

According to the non-limiting embodiment illustrated in the figures, the mold 1 further comprises a beam component 16 for moving the core or internal component 2 when the shells 5, 6, 7 are in the opening or removal position. In this case, the constraint portion 4 comprises a connection section 17 to the beam component 16, while the connection section 17 extends from the at least one protruding or recessed section 9 away from the molding portion 3.

Clearly, the beam component 16 can be moved in any suitable way, by means of appropriate actuator means, to move the core or internal component 2 depending on the step of the molding method.

With reference then in detail to the external shells 5, 6, 7, they, according to the non-limiting embodiment illustrated in the figures, comprise a pair of external main shells 5, 6, each with an external main face 5a, 6a and an internal main face 5b, 6b in which part or half of a recessed shape or zone S1, S2 is defined or hollowed out corresponding to the volume of part of the core or internal component 2, and more specifically of the molding portion 3 (taking into account the thickness of the moulding gap or impression) and of part of the constraint portion 4, also taking into account the gap or moulding impression and any localized slack, for example in the section of continuation of the shape or connection or intermediate section 8 and/or in the protruding or recessed section 9 and/or in the connection section 17.

The two shapes S1, S2 advantageously have a substantially mirrored configuration.

Moreover, one or, preferably, both shapes S1, S2 have at least:
- a first portion S3, S4 configured substantially as the external surface of the molding portion 3, clearly also taking into account the thickness of the molding gap or impression that must be maintained between the external shells 5, 6 and the molding portion 3, and
- a second portion S5, S6 configured substantially as the external surface of the at least one protruding or recessed section 9 or at least defining, among other things, one or more specific recessed or protruding areas or portions S5a, S6a for engagement, by fitting or interlocking or by shape or in contact, with at least one first protruding segment or sector 9a of the same or with one or more recesses or hollow areas defined in the protruding or recessed section 9.

Substantially, the second portion S5, S6 is substantially complementary to at least one protruding or recessed section 9 or at least with at least one first protruding segment or sector 9a or with one or more recesses or hollow zones of the protruding or recessed section 9.

If desired, one or, preferably, both of the shapes S1, S2 also have a third portion S7, S8 configured substantially, in whole or in part as the external surface of the at least one continuation section of the shape or connection or intermediate section 8, so as to ensure an engagement, if desired of contact or shape, between portion S7, S8 and all or part of the section 8.

Moreover, if the core or internal component 2 comprises a connecting section 18, then one or, preferably, both of the shapes S1, S2 can also include a fourth portion S9, S10 configured substantially as the external surface of the connecting section 17, so as to ensure an engagement, if desired of contact or shape, between portion S9, S10 and all or part of the section 17.

Clearly, when the two external shells 5, 6, 7 are brought into the closed position, the two shapes S1, S2 of the main external shells 5, 6 are actually joined or better faced one against the other with the interposition of the core or internal component 2.

This entails in detail that the two first portions S3, S4 are actually joined or rather faced against each other with the interposition of the moulding portion 3, leaving the molding gap or impression, while the two second portions S5, S6 are in fact joined or rather faced against each other with the interposition of the protruding or recessed section 9 which is tightened between them, at least as a function of the shape engagement or interlocking or fitting or contact engagement of part of one or both of the second portions S5, S6 with at least one first protruding segment or sector 9a or with one or more recesses or hollow zones of the protruding or recessed section 9, although preferably the interlocking or fitting or shape engagement involves the entire protruding or recessed section 9.

If desired, in the closed position, the two third portions S7, S8 are in fact joined or better faced each other with the interposition of the continuation section of the shape or connection or intermediate 8, which is tightened, in whole or in part, between them.

Moreover, if the core or internal component 2 includes a connection section 18, then in the closed position, the two fourth portions S9, S10 are in fact joined or better faced each other with the interposition of the connection section 17, which is tightened, in whole or in part, between them.

If desired, the external shells also comprise a bottom plate 7 designed to be placed under the core or internal component 2, in contact with the bottom of the latter in the closed position and defining with the latter part of the molding gap or impression, in particular the part designed to constitute, once the compound or mixture has been moulded, the bottom of an outer shell of a ski boot.

The bottom plate 7 can be housed, at least in the molding position, in special fifth portions S11, S12 of one or both of the shapes S1, S2.

Clearly, the mold 1 also comprises other components or elements, such as definition components mounted slidingly or not and designed to define respective decorations or configurations on an outer shell to be moulded.

In the mold or better in the external shells can then be delimited the paths for the possible injection of the compound or mixture into the gap or impression as well as other possible elements of a mold for the production, in particular for injection or vulcanization molding, of an external shell of a ski boot.

Of course, a machine could comprise a series of molds 1 each mounted around a respective frame.

A method for molding, in particular for injection or vulcanization molding, an outer shell of a ski boot using a mold as above indicated substantially comprises the following steps:
- arrange the external shells 5, 6, 7 in the at least one opening or removal position,
- relatively move the core or internal component 2 and the external shells 5, 6, 7, so that the core or internal component 2 is in an area between the external shells 5, 6, 7, for example among the shapes S1, S2,
- with the core or internal component 2 in the molding position or close to it, activate the approach/removal means so as to bring the external shells 5, 6, 7 in the closed position, so that the at least two external shells surround the entire molding portion 3 and at least part or all of the constraint portion 4 and engage at least part of the constraint portion 4 defining with the external surface 3a of the molding portion 3 a gap or impression for molding a compound or mixture for obtaining an outer shell of a ski boot,
- inject a compound or mixture into the gap or impression after the previous step or arrange a compound or mixture on the core or internal component 2 in the molding position before moving the external shells 5, 6, 7 to the closed position,
- molding, if desired by applying heat or pressure or with other suitable means, the outer shell in the gap or impression with the external shells 5, 6, 7 in the at least one closed position,
- bringing the external shells 5, 6, 7 into the at least one opening or removing position and decouple from the core or internal component 2 the outer shell molded in the molding gap or impression following the movement of the mutually movable parts 10, 11 to the extraction or disinsertion position.

Furthermore, at least one of the external shells 5, 6, 7, in the closed position, engages, for example by means of a fitting or shape engagement, the at least one protruding or recessed section 9 and, if desired, also the at least one section of continuation of the shape or of connection or intermediate section 8.

Preferably, the completion of the movement of the mutually movable parts 10, 11 from the extraction or disinsertion position to the molding position or in any case the removable locking of the mutually movable parts 10, 11 in the molding position is carried out also or only by engaging, if desired by shape or fitting, in whole or in part, at least one of the external shells 5, 6, 7 with the at least one protruding or recessed section 9.

If an elastic loading element 15 is provided, the same would be designed to bring the at least two movable parts 10, 11 towards the molding position starting from the extraction or disinsertion position, but the completion of the movement or in any case the removable locking of the movable parts 10, 11 from the extraction or disinsertion position to the molding position is preferably carried out by the engagement, if desired of shape or fitting, in whole or in part, of at least one of the at least two external shells 5, 6, 7 with the at least one protruding or recessed section 9.

Clearly, an elastic loading element 15 could also not be provided, but could be provided an actuator or similar to relatively move the two parts 10, 11.

With reference to the step of decoupling from the core or internal component, the outer shell molded in the molding gap or impression following the movement of the mutually movable parts 10, 11 into the extraction or disinsertion position, the outer shell molded is moved and brought away from the molding portion 3, in particular from the section of the molding portion 3 belonging to the fixed part 10, after which it is possible, by appropriately pushing the outer shell, to complete the removal or decoupling.

In this regard, the decoupling step can be carried out by pushing, using a special actuator, for example pneumatic or hydraulic or oleodynamic or even manually or using a special lever, preferably at the outside of the heel of the external shell.

Furthermore, once the external shells 5, 6, 7 have been brought to at least one open or removed position, the core or internal component 2 can be moved, acting on the possible beam component 16, so as to bring it to a zone where the decoupling or removal of the outer shell from the core or internal component 2 occurs.

As it will be understood thanks to a mold 1 and a method according to the present invention, it is possible to free or remove the external shell of a ski boot from a core or internal component 2 of a mold without damaging the outer shell.

Furthermore, the closing and confirmation of the closure system of the mold 1 is carried out with very simple and effective mechanics, actually obtained with a mechanical torque on metal parts.

A resistant coupling is thus obtained during the molding step, thanks to the engagement between at least one external shell 5, 6, 7 and a protruding or recessed section 9 in the closed position. This ensures mold resistance and durability, even in the face of high specific pressures during molding.

Therefore, large interference surfaces between the shells and the internal core are provided, as well as the safety of the mutual position between the first 10 and second 11 parts during molding and, if desired, when the material is inserted.

Modifications and variants of the invention are possible with the scope defined by the claims.

## Claims

1. Mold for the production, in particular for injection or vulcanization moulding, of an outer shell of a ski boot, comprising:
- a core or internal component (2) having a molding portion (3) and a constraint portion (4),
- at least two external shells (5, 6, 7),
- means for approaching/removing said at least two external shells (5, 6, 7), between
at least one closed position, in which said at least two external shells (5, 6, 7) surround the entire molding portion (3) and at least part of said constraint portion (4) of said core or internal component (2), in such a way as to engage said constraint portion (4) and define with an external surface (3a) of said molding portion (3) a gap or impression (GI) for molding a compound or mixture to obtain an outer shell of a ski boot, and
at least one opening or removing position, in which it is possible to decouple from said core or internal component (2) an outer shell molded in said molding gap or impression (GI),
said molding portion (3) having an external surface (3a) configured as the inside of an outer shell of a ski boot, and thus having a back (3b), a tip or front (3c), a top (3d), a bottom (3e) and sides (3f, 3g) corresponding, respectively, to the internal surface of the back, toe, top, bottom and sides of an outer shell of a ski boot to be molded on said molding portion (3), whereas
said constraint portion (4) has, moving away from said molding portion (3), at least one continuation section of the shape of said molding portion (3) or at least one connecting or intermediate section (8) and then at least one section (9) protruding or recessed with respect to the continuation section of the shape of said molding portion or with respect to the connecting or intermediate section (8),
said core or internal component (3) comprising at least two parts (10, 11) mutually movable with respect to each other, i.e. at least one first (10) and one second (11) part, said at least two parts (10, 11) being mutually movable between
a molding position, in which the external faces of said at least two mutually movable parts (10, 11) are aligned or in any case arranged so as to define the external surface (3a) configured as the inside of an outer shell of a ski boot to be molded, and
a position of extraction or disinsertion from the core or internal component (2) of an outer shell molded into said molding gap or impression (GI),
wherein said second part (11) extends on the back (3b) of the molding portion (3) from the bottom (3e) to the top (3d) of the latter and then continues in said at least one continuation section of the shape of said molding portion or in said connecting or intermediate section (8), **characterized in that** said second part terminates in at least part (9a) of said at least one protruding or recessed section (9), and
**in that** at least one of said at least two external shells (5, 6, 7) in said closed position engages, in whole or in part, said at least one protruding or recessed section (9).

2. Mold according to claim 1, wherein at least one of said at least two external shells (5, 6, 7) in said closed position, fit engages or engages by shape in whole or in part, said at least one protruding or recessed section (9).

3. Mold according to claim 1 or 2, wherein in said closed position at least one of said at least two external shells (5, 6, 7) also engages said at least one continuation section of the shape of said molding portion or said connecting or intermediate section (8).

4. Mold according to claim 1 or 2 or 3, wherein said mutually movable parts (10, 11) are pivoted to each other around a pivot pin (12), so that said second part (11) is movable with respect to the other part or parts (10) in a curved or curvilinear direction around the pivot pin (12).

5. Mold according to any one of the previous claims, wherein the interface or coupling surface (IS1, IS2) of each of said at least two mutually movable parts (10, 11) with the other or others mutually movable parts (11, 10) has a curved or curvilinear segment (IS1a, IS2a) at the molding portion (3) and then, in the constraint portion (4), a substantially straight section (IS1b, IS2b) or in any case a section, in the molding position, with a main extension direction substantially parallel to the direction from the top (3d) to the bottom (3e).

6. Mold according to any one of the previous claims, wherein said at least one protruding or recessed section (9) protrudes, in the rear (3b)-front (3c) direction, with respect to said continuation section of the shape of said molding portion or with respect to said connecting or intermediate section (8) or a section larger than the latter in a plane orthogonal to the bottom (3e)-top (3d) direction, said protruding section (9) being substantially shaped as a slat or a polyhedron in said molding position, said second part (11) including a segment (9a) of said slat or polyhedron, so that in said extraction or disinsertion position the segment (9a) of the slat or polyhedron is misaligned or in any case staggered or displaced with respect to the remaining part (9b) of the slat or polyhedron.

7. Mold according to claim 6, wherein said at least one protruding or recessed section (9) is substantially shaped as a polyhedron with a main dimension larger than the others in a direction parallel to the front (3c)-back (3b) direction.

8. Mold according to claim 6 or 7, wherein said at least one protruding or recessed section (9) is shaped as a parallelepiped or prism, if desired with hexagonal bases, while said second part (11) includes a segment (9a) of said at least one protruding or recessed section (9) protruding with respect to said at least one continuation section of the shape of said molding portion or with respect to said connecting or intermediate section (8) in the front (3c)-rear (3b) direction and starting from said continuation section of the shape of said molding portion or from said connecting or intermediate section (8) with a direction from the front (3c) to the back (3b).

9. Mold according to any one of the previous claims, wherein said second part (11) includes a reinforcement segment or gusset (11a) which extends between a respective segment (8a) of said at least one said continuation section of the shape of said molding portion or of said connecting or intermediate section (8) and a respective segment (9a) of said at least one protruding or recessed section (9).

10. Mold according to any one of the previous claims, comprising mechanical interference or engagement means (13a, 13b) of said at least two mutually movable parts (10, 11) formed at the respective interface or coupling surfaces (IS1, IS2) of said at least two mutually movable parts (10, 11) with each other or with the others.

11. Mold according to claim 10, wherein said mechanical interference or engagement means comprise at least one projection (13a) in said first (10) or second (11) part which is wholly or partly conical or tapered away from the respective first (10) or second part (11), said at least one projection (13a) being designed to engage, in said molding position, a respective seat (13b) in the other second (11) or first (10) part, which seat (13b) is partially conical or with a section decreasing towards the inside of the respective second (11) or first (10) part.

12. Mold according to any one of the previous claims, comprising at least one elastic loading element (15) designed to oppose the relative movement of said at least two mutually mobile parts (10, 11) from said molding position to said extraction or disinsertion position and designed to act so as to bring said at least two mutually movable parts (10, 11) back into or towards said molding position.

13. Mold according to claim 12, wherein said at least one elastic loading element (15) is designed to bring said at least two mutually movable parts (10, 11) towards said molding position or close to the same, but the completion of the movement from said extraction or disinsertion position to said molding position or in any case the removable locking of said mutually movable parts (10, 11) in said molding position is carried out by the engagement of at least one of said at least two external shells (5, 6, 7) with said at least one protruding or recessed section (9) or with a segment or sector (9a) thereof.

14. Mold according to any one of the previous claims, wherein said mold includes at least one actuator for moving said at least two mutually movable parts (10, 11) with respect to each other.

15. Mold according to claim 14, wherein said at least one actuator is designed to act directly or by means of a respective lever or pusher component against the back of said second part (11).

16. Mold according to any one of the previous claims, comprising a beam component (16) for moving said core or internal component (2) when said at least two shells (5, 6, 7) are in said at least one opening or removing position and wherein said constraint portion (4) includes a connection section (17) to said beam component (16), said connection section (17) extending from said at least one protruding or recessed section (9) away from said molding portion (3).

17. Method for molding, in particular for injection or vulcanization molding, an outer shell of a ski boot using a mold according to any one of the preceding claims, said method comprising the following steps:
- arrange said external shells (5, 6, 7) in said at least one opening or removal position,
- relatively move said core or internal component (2) and said external shells (5, 6, 7), so that said core or internal component (2) is in an area between said external shells (5, 6, 7),
- with said core or internal component in said molding position or close to it, activate the approach/removal means so as to bring said at least two external shells (5, 6, 7) in said at least one closed position, so that said at least two external shells (5, 6, 7) surround the entire molding portion (3) and at least part of said constraint portion (4) of said core or internal component (2) and engage at least part of said constraint portion (4) defining with said external surface (3a) of said molding portion (3) a gap or impression (GI) for molding a compound or mixture for obtaining an outer shell of a ski boot,
- inject a compound or mixture into said gap or impression (GI) after the previous step or arrange a compound or mixture on said core or internal component (2) in said molding position before moving said external shells (5, 6, 7) to said closed position,
- molding said outer shell in said gap or impression (GI) with said external shells (5, 6, 7) in said at least one closed position,
- bring said external shells (5, 6, 7) into said at least one opening or removing position and decouple from said core or internal component (2) the outer shell molded in said molding gap or impression (GI) following the movement of said mutually movable parts (10, 11) to said extraction or disinsertion position,
wherein at least one of the external shells (5, 6, 7) engages, in whole or in part, said at least one protruding or recessed section (9) in said closed position.

18. Method according to claim 17, wherein the completion of the movement of said mutually movable parts (10, 11) from said extraction or disinsertion position to said molding position or in any case the removable locking of said mutually movable parts (10, 11) in said molding position is carried out also or only by engaging at least one of the external shells (5, 6, 7) with said at least one protruding or recessed section (9).

## Patentansprüche

1. Form zur Herstellung, insbesondere zur Spritzguss- oder Vulkanisations-Formung, einer Außenschale eines Skischuhs, umfassend:
- einen Kern oder eine innere Komponente (2) mit einem Formungsbereich (3) und einem Einschränkungsbereich (4),
- mindestens zwei äußeren Schalen (5, 6, 7),
- Mittel zur Annäherung/Entnahme der besagten mindestens zwei äußeren Schalen (5, 6, 7), zwischen
mindestens einer geschlossenen Position, in der die besagten mindestens zwei äußeren Schalen (5, 6, 7) den gesamten Formungsbereich (3) und mindestens einen Teil des besagten Einschränkungsbereichs (4) des besagten Kerns oder der besagten inneren Komponente (2) in einer solchen Weise umgeben, dass sie in den besagten Einschränkungsbereich (4) eingreifen und mit einer äußeren Oberfläche (3a) des besagten Formungsbereichs (3) einen Spalt oder Abdruck (GI) zum Formen einer Verbindung oder Mischung definieren, um eine Außenschale eines Skischuhs zu erhalten, und
mindestens eine Öffnungs- oder Entnahmeposition, in der es möglich ist, eine Außenschale von dem besagten Kern oder der besagten inneren Komponente (2) zu entkoppeln, die in dem besagten Formspalt oder Abdruck (GI) geformt ist,
wobei der besagte Formungsbereich (3) eine äußere Oberfläche (3a) aufweist, die als die Innenseite einer Außenschale eines Skischuhs ausgebildet ist, und somit eine Rückseite (3b), eine Spitze oder Vorderseite (3c), eine Oberseite (3d), eine Unterseite (3e) und Seiten (3f, 3g) aufweist, die jeweils der inneren Oberfläche der Rückseite, der Spitze, der Oberseite, der Unterseite und der Seiten einer Außenschale eines Skischuhs entsprechen, der an dem besagten Formungsbereich (3) zu formen ist, wobei
der besagte Einschränkungsbereich (4), sich von dem besagten Formungsbereich (3) wegbewegend, mindestens einen Fortsetzungsabschnitt der Formgebung des besagten Formungsbereichs (3) oder mindestens einen Verbindungs- oder Zwischenabschnitt (8) und dann mindestens einen Abschnitt (9), der in Bezug auf den Fortsetzungsabschnitt der Formgebung des besagten Formungsbereichs oder in Bezug auf den Verbindungs- oder Zwischenabschnitt (8) vorspringt oder vertieft ist, aufweist,
wobei der besagte Kern oder die besagte innere Komponente (3) mindestens zwei Teile (10, 11), d.h. mindestens einen ersten (10) und einen zweiten (11) Teil, die in Bezug zueinander gegeneinander beweglich sind, umfasst, wobei die besagten mindestens zwei Teile (10, 11) gegeneinander beweglich sind zwischen einer Formungsposition, in der die äußeren Flächen der besagten mindestens zwei gegeneinander beweglichen Teile (10, 11) ausgerichtet oder in jedem Fall so angeordnet sind, dass sie die äußere Oberfläche (3a) definieren, die als die Innenseite einer Außenschale eines zu formenden Skischuhs ausgebildet ist, und
einer Position des Herausziehens oder Herausnehmens aus dem Kern oder der inneren Komponente (2) einer Außenschale, die in dem besagten Formspalt oder Abdruck (GI) geformt ist, worin sich der besagte zweite Teil (11) auf der Rückseite (3b) des Formungsbereichs (3) von der Unterseite (3e) zur Oberseite (3d) des letzteren erstreckt und sich dann in dem besagten mindestens einen Fortsetzungsabschnitt der Formgebung des besagten Formungsbereichs oder in dem besagten Verbindungs- oder Zwischenabschnitt (8) fortsetzt, **dadurch gekennzeichnet, dass** der besagte zweite Teil in mindestens einem Teil (9a) des besagten mindestens einen vorspringenden oder vertieften Abschnitts (9) endet, und dadurch, dass mindestens eine der besagten mindestens zwei äußeren Schalen (5, 6, 7) in der besagten geschlossenen Position, ganz oder teilweise, in den besagten mindestens einen vorspringenden oder vertieften Abschnitt (9) eingreift.

2. Form nach Anspruch 1, worin mindestens eine der besagten mindestens zwei äußeren Schalen (5, 6, 7) in der besagten geschlossenen Position ganz oder teilweise in den besagten mindestens einen vorspringenden oder vertieften Abschnitt (9) passend eingreift oder durch Formschluss eingreift.

3. Form nach Anspruch 1 oder 2, worin in der besagten geschlossenen Position mindestens eine der besagten mindestens zwei äußeren Schalen (5, 6, 7) auch in den besagten mindestens einen Fortsetzungsabschnitt der Formgebung des besagten Formungsbereichs oder in den besagten Verbindungs- oder Zwischenabschnitt (8) eingreift.

4. Form nach Anspruch 1 oder 2 oder 3, worin die besagten gegeneinander beweglichen Teile (10, 11) um einen Drehzapfen (12) drehbar zueinander gelagert sind, so dass der besagte zweite Teil (11) in Bezug auf den anderen Teil oder die anderen Teile (10) in einer gekrümmten oder krummlinigen Richtung um den Drehzapfen (12) beweglich ist.

5. Form nach irgendeinem der vorangegangenen Ansprüche, worin die Verbindungs- oder Kopplungsoberfläche (IS1, IS2) jeder der besagten mindestens zwei gegeneinander beweglichen Teile (10, 11) mit dem anderen oder den anderen gegeneinander beweglichen Teilen (11, 10) ein gekrümmtes oder krummliniges Segment (IS1a, IS2a) am Formungsbereich (3) und dann, im Einschränkungsbereich (4), ein im Wesentlichen gerader Abschnitt (IS1b, IS2b) oder in jedem Fall ein Abschnitt, in der Formungsposition, mit einer Haupterstreckungsrichtung, im Wesentlichen parallel zur Richtung von der Oberseite (3d) zur Unterseite (3e) ist.

6. Form nach irgendeinem der vorangegangenen Ansprüche, worin der besagte mindestens eine vorspringende oder vertiefte Abschnitt (9) in der hinteren (3b)-vorderen (3c) Richtung in Bezug auf den besagten Fortsetzungsabschnitt der Formgebung des besagten Formungsbereichs oder in Bezug auf den besagten Verbindungs- oder Zwischenabschnitt (8) oder einen Abschnitt, der größer als der letztere ist, in einer Ebene orthogonal zur unteren (3e)-oberen (3d) Richtung vorspringt, wobei der besagte vorspringende Abschnitt (9) im Wesentlichen als eine Lamelle oder ein Polyeder in der besagten Formungsposition geformt ist, wobei der besagte zweite Teil (11) ein Segment (9a) der besagten Lamelle oder des besagten Polyeders beinhaltet, so dass in der besagten Herauszieh- oder Herausnahmeposition das Segment (9a) der Lamelle oder des Polyeders in Bezug auf den verbleibenden Teil (9b) der Lamelle oder des Polyeders falsch ausgerichtet oder in jedem Fall versetzt oder verschoben ist.

7. Form nach Anspruch 6, worin der besagte mindestens eine vorspringende oder vertiefte Abschnitt (9) im Wesentlichen als ein Polyeder geformt ist mit einer Hauptabmessung, die in eine Richtung parallel zur vorderen (3c)-hinteren (3b) Richtung größer als die anderen ist.

8. Form nach Anspruch 6 oder 7, worin der besagte mindestens eine vorspringende oder vertiefte Abschnitt (9) als Parallelepiped oder Prisma, wenn gewünscht mit hexagonalen Grundflächen, geformt ist, während der besagte zweite Teil (11) ein Segment (9a) des besagten mindestens einen vorspringenden oder vertieften Abschnitts (9) beinhaltet, das in Bezug auf den besagten mindestens einen Fortsetzungsabschnitt der Formgebung des besagten Formungsbereichs oder in Bezug auf den besagten Verbindungs- oder Zwischenabschnitt (8) in der vorderen (3c)-hinteren (3b) Richtung vorspringt und von dem besagten Fortsetzungsabschnitt der Formgebung des besagten Formungsbereichs oder von dem besagten Verbindungs- oder Zwischenabschnitt (8) in einer Richtung von der Vorderseite (3c) zur Rückseite (3b) ausgeht.

9. Form nach irgendeinem der vorangegangenen Ansprüche, worin der besagte zweite Teil (11) ein Verstärkungssegment oder eine Versteifung (11a) beinhaltet, das/die sich zwischen einem jeweiligen Segment (8a) des besagten mindestens einen besagten Fortsetzungsabschnitts der Formgebung des besagten Formungsbereichs oder des besagten Verbindungs- oder Zwischenabschnitts (8) und einem jeweiligen Segment (9a) des besagten mindestens einen vorspringenden oder vertieften Abschnitts (9) erstreckt.

10. Form nach irgendeinem der vorangegangenen Ansprüche, umfassend mechanische Einwirkungs- oder Eingriffsmittel (13a, 13b) der besagten mindestens zwei gegeneinander beweglichen Teile (10, 11), die an den jeweiligen Verbindungs- oder Kopplungsoberflächen (IS1, IS2) der besagten mindestens zwei gegeneinander beweglichen Teile (10, 11) miteinander oder mit den anderen geformt werden.

11. Form nach Anspruch 10, worin die besagten mechanischen Einwirkungs- oder Eingriffsmittel mindestens einen Vorsprung (13a) in dem besagten ersten (10) oder zweiten (11) Teil umfassen, der ganz oder teilweise konisch ist oder sich von dem jeweiligen ersten (10) oder zweiten Teil (11) weg verjüngt, wobei der besagte mindestens eine Vorsprung (13a) so ausgelegt ist, dass er in der besagten Formungsposition in einen jeweiligen Sitz (13b) in dem anderen zweiten (11) oder ersten (10) Teil eingreift, wobei der Sitz (13b) teilweise konisch oder mit einem zur Innenseite des jeweiligen zweiten (11) oder ersten (10) Teils hin abnehmenden Abschnitt ist.

12. Form nach irgendeinem der vorangegangenen Ansprüche, umfassend mindestens ein elastisches Belastungselement (15), das ausgelegt ist, um der relativen Bewegung der besagten mindestens zwei gegeneinander beweglichen Teile (10, 11) aus der besagten Formungsposition in die besagte Herauszieh- oder Herausnahmeposition entgegenzuwirken, und ausgelegt ist, um so zu wirken, dass es die besagten mindestens zwei gegeneinander beweglichen Teile (10, 11) in die besagte Formungsposition zurück oder zu ihr hin bringt.

13. Form nach Anspruch 12, worin das besagte mindestens eine elastische Belastungselement (15) ausgelegt ist, um die besagten mindestens zwei gegeneinander beweglichen Teile (10, 11) zu der besagten Formungsposition oder in die Nähe derselben zu bringen, aber die Vollendung der Bewegung von der besagten Herauszieh- oder Herausnahmeposition in die besagte Formungsposition oder in jedem Fall die lösbare Verriegelung der besagten gegeneinander beweglichen Teile (10, 11) in der besagten Formungsposition durch den Eingriff von mindestens einer der besagten mindestens zwei äußeren Schalen (5, 6, 7) in den besagten mindestens einen vorspringenden oder vertieften Abschnitt (9) oder in einen Segment oder Sektor (9a) davon ausgeführt wird.

14. Form nach irgendeinem der vorangegangenen Ansprüche, worin die besagte Form mindestens einen Aktuator zum Bewegen der besagten mindestens zwei gegeneinander beweglichen Teile (10, 11) in Bezug zueinander beinhaltet.

15. Form nach Anspruch 14, worin der besagte mindestens eine Aktuator ausgelegt ist, um direkt oder mittels einer jeweiligen Hebel- oder Schubkomponente gegen die Rückseite des besagten zweiten Teils (11) zu wirken.

16. Form nach irgendeinem der vorangegangenen Ansprüche, umfassend eine Trägerkomponente (16) zum Bewegen des besagten Kerns oder der besagten inneren Komponente (2), wenn sich die besagten mindestens zwei Schalen (5, 6, 7) in der besagten mindestens einen Öffnungs- oder Entnahmeposition befinden, und worin der besagte Einschränkungsbereich (4) einen Verbindungsabschnitt (17) zu der besagten Trägerkomponente (16) beinhaltet, wobei sich der besagte Verbindungsabschnitt (17) von dem besagten mindestens einen vorspringenden oder vertieften Abschnitt (9) von dem besagten Formungsbereich (3) weg erstreckt.

17. Verfahren zur Formung, insbesondere zur Spritzguss- oder Vulkanisations-Formung, einer Außenschale eines Skischuhs unter Verwendung einer Form nach irgendeinem der vorangegangenen Ansprüche, wobei das besagte Verfahren die folgenden Schritte umfasst:
- Anordnen der besagten äußeren Schalen (5, 6, 7) in der besagten mindestens einen Öffnungs- oder Entnahmeposition,
- relatives Bewegen des besagten Kerns oder der besagten inneren Komponente (2) und der besagten äußeren Schalen (5, 6, 7), so dass sich der besagte Kern oder die besagte innere Komponente (2) in einem Bereich zwischen den besagten äußeren Schalen (5, 6, 7) befindet,
- mit dem besagten Kern oder der besagten inneren Komponente in der besagten Formungsposition oder in deren Nähe, Aktivieren der Annäherungs-/Entnahmemittel, um die besagten mindestens zwei äußeren Schalen (5, 6, 7) in die besagte mindestens eine geschlossene Position zu bringen, so dass die besagten mindestens zwei äußeren Schalen (5, 6, 7) den gesamten Formungsbereich (3) und mindestens einen Teil des besagten Einschränkungsbereichs (4) des besagten Kerns oder der besagten inneren Komponente (2) umgeben und in mindestens einen Teil des besagten Einschränkungsbereichs (4) eingreifen, so dass sie mit der besagten äußeren Oberfläche (3a) des besagten Formungsbereichs (3) einen Spalt oder Abdruck (GI) zum Formen einer Verbindung oder Mischung definieren, um eine Außenschale eines Skischuhs zu erhalten,
- Einspritzen einer Verbindung oder einer Mischung in den besagten Spalt oder Abdruck (GI) nach dem vorangegangenen Schritt oder Anordnen einer Verbindung oder Mischung auf dem besagten Kern oder der besagten inneren Komponente (2) in der besagten Formungsposition vor dem Bewegen der besagten äußeren Schalen (5, 6, 7) in die besagte geschlossene Position,
- Formen der besagten Außenschale in dem besagten Spalt oder Abdruck (GI), wobei sich die besagten äußeren Schalen (5, 6, 7) in der besagten mindestens einen geschlossenen Position befinden,
- Bringen der besagten äußeren Schalen (5, 6, 7) in die besagte mindestens eine Öffnungs- oder Entnahmeposition und Entkoppeln der in dem besagten Formspalt oder Abdruck (GI) geformten Außenschale von dem besagten Kern oder der besagten inneren Komponente (2) nach der Bewegung der gegeneinander beweglichen Teile (10, 11) in die besagte Herauszieh- oder Herausnahmeposition,
worin mindestens eine der äußeren Schalen (5, 6, 7), ganz oder teilweise, in den besagten mindestens einen vorspringenden oder vertieften Abschnitt (9) in der besagten geschlossenen Position eingreift.

18. Verfahren nach Anspruch 17, worin die besagte Vollendung der Bewegung der besagten gegeneinander beweglichen Teile (10, 11) von der besagten Herauszieh- oder Herausnahmeposition in die besagte Formungsposition oder in jedem Fall die lösbare Verriegelung der besagten gegeneinander beweglichen Teile (10, 11) in der besagten Formungsposition auch oder nur durch Eingreifen mindestens einer der äußeren Schalen (5, 6, 7) in den besagten mindestens einen vorspringenden oder vertieften Abschnitt (9) ausgeführt wird.

## Revendications

1. Moule pour la production, en particulier pour l'injection ou le moulage par vulcanisation, d'une coque extérieure de chaussure de ski, comprenant :
- un noyau ou un composant intérieur (2) comportant une portion de moulage (3) et une portion de contrainte (4),
- au moins deux coques extérieures (5, 6, 7),
- des moyens pour approcher/retirer lesdites au moins deux coques extérieures (5, 6, 7), entre
au moins une position fermée, dans laquelle lesdites au moins deux coques extérieures (5, 6, 7) entourent toute la portion de moulage (3) et au moins une partie de ladite portion de contrainte (4) de ce noyau ou composant intérieur (2), de manière à engager ladite portion de contrainte (4) et à définir avec une surface extérieure (3a) de ladite portion de moulage (3) un espace ou une empreinte (GI) pour mouler un composé ou un mélange afin d'obtenir une coque extérieure d'une chaussure de ski, et
au moins une position d'ouverture ou de retrait, dans laquelle il est possible de découpler dudit noyau ou composant intérieur (2) une coque extérieure moulée dans ledit espace ou ladite empreinte (GI),
ladite portion de moulage (3) ayant une surface extérieure (3a) configurée comme l'intérieur d'une coque extérieure d'une chaussure de ski, et donc ayant un dos (3b), un bout ou avant (3c), un haut (3d), un bas (3e) et des côtés (3f, 3g) correspondant, respectivement, à la surface intérieure du dos, de l'orteil, du haut, du dessous et des côtés d'une coque extérieure de chaussure de ski à mouler sur ladite portion de moulage (3), tandis que
ladite portion de contrainte (4) a, en s'éloignant de ladite portion de moulage (3), au moins une section de continuation de la forme de ladite portion de moulage (3) ou au moins une section de connexion ou intermédiaire (8), puis au moins une section (9) saillante ou encastrée par rapport à la section de continuation de la forme de ladite portion de moulage ou par rapport à la section de connexion ou intermédiaire (8),
ledit noyau ou composant intérieur (3) comprenant au moins deux parts (10, 11) mutuellement mobiles l'un par rapport à l'autre, c'est-à-dire au moins une première (10) et une seconde (11) partie, lesdites au moins deux parties (10, 11) étant mutuellement mobiles entre une position de moulage, dans laquelle les faces extérieures desdites au moins deux parties mutuellement mobiles (10, 11) sont alignées ou en tout cas disposées de manière à définir la surface extérieure (3a) configurée comme l'intérieur d'une coque extérieure d'une chaussure de ski à mouler, et
une position d'extraction ou de désinsertion du noyau ou du composant intérieur (2) d'une coque extérieure moulée dans ladite ouverture ou empreinte (GI), dans laquelle ladite seconde partie (11) s'étend à l'arrière (3b) de la portion de moulage (3) du bas (3e) au haut (3d) de cette dernière, puis continue dans ladite au moins une section de continuation de la forme de ladite portion de moulage ou dans ladite section de connexion ou intermédiaire (8), **caractérisée en ce que** ladite seconde partie se termine dans au moins une partie (9a) de ladite section saillante ou encastrée (9), et **en ce qu'**au moins l'une desdites deux coques extérieures (5, 6, 7) dans ladite position fermée s'engage, en tout ou partie, avec ladite au moins une section saillante ou encastrée (9).

2. Moule selon la revendication 1, dans lequel au moins l'une desdites deux coques extérieures (5, 6, 7) dans ladite position fermée s'adapte ou s'engage par forme en tout ou partie, avec ladite au moins une section saillante ou encastrée (9).

3. Moule selon la revendication 1 ou 2, dans lequel dans ladite position fermée au moins l'une desdites deux coques extérieures (5, 6, 7) s'engage également avec ladite au moins une section de continuation de la forme de ladite portion de moulage ou de ladite section de connexion ou intermédiaire (8).

4. Moule selon la revendication 1, 2 ou 3, dans lequel lesdites parties mutuellement mobiles (10, 11) sont pivotées l'une vers l'autre autour d'une goupille pivotante (12), de sorte que ladite seconde partie (11) est mobile par rapport à l'autre ou aux autres parties (10) dans une direction courbe ou curviligne autour de la goupille pivotante (12).

5. Moule selon l'une quelconque des revendications précédentes, dans lequel la surface d'interface ou de couplage (IS1, IS2) de chacune desdites au moins deux parties mutuellement mobiles (10, 11) avec l'autre ou d'autres parties mutuellement mobiles (10, 11) présente un segment courbe ou curviligne (IS1a, IS2a) à la portion de moulage (3) puis, dans la portion de contrainte (4), une section sensiblement droite (IS1b, IS2b) ou en tout cas une section, en position de moulage, avec une direction d'extension principale sensiblement parallèle à la direction du haut (3d) vers le bas (3e).

6. Moule selon l'une quelconque des revendications précédentes, dans lequel ladite au moins une section saillante ou encastrée (9) dépasse, dans la direction arrière (3b)-avant (3c), par rapport à ladite section de continuation de la forme de ladite portion de moulage ou par rapport à ladite section de connexion ou intermédiaire (8), ou une section plus grande que cette dernière dans un plan orthogonal à la direction bas (3e)-haut (3d), ladite section saillante (9) étant sensiblement façonnée comme une latte ou un polyèdre dans la position de moulage, ladite seconde partie (11) incluant un segment (9a) de ladite latte ou dudit polyèdre, de sorte que dans ladite position d'extraction ou de désinsertion, le segment (9a) de la latte ou du polyèdre soit désaxé ou, dans tous les cas, décalé ou déplacé par rapport à la partie restante (9b) de la latte ou du polyèdre.

7. Moule selon la revendication 6, dans lequel ladite au moins une section saillante ou encastrée (9) est sensiblement en forme de polyèdre avec une dimension principale plus grande que les autres dans une direction parallèle à la direction avant (3c)-arrière (3b).

8. Moule selon la revendication 6 ou 7, dans lequel ladite au moins une section saillante ou encastrée (9) est en forme de parallélépipède ou de prisme, si désiré avec des bases hexagonales, tandis que ladite seconde partie (11) comprend un segment (9a) de ladite au moins une section saillante ou encastrée (9) saillante par rapport à ladite au moins une section de continuation de la forme de ladite portion de moulage ou par rapport à ladite section de connexion ou intermédiaire (8) dans la direction avant (3c)-arrière (3b) et en partant de ladite section de continuation de la forme de ladite portion de moulage ou de ladite section de connexion ou intermédiaire (8) avec une direction de l'avant (3c) vers l'arrière (3b).

9. Moule selon l'une quelconque des revendications précédentes, dans lequel la seconde partie (11) comprend un segment de renfort ou un gousset (11a) qui s'étend entre un segment respectif (8a) de ladite au moins une ladite section de continuation de la forme de ladite portion de moulage ou de ladite section de connexion ou intermédiaire (8) et un segment respectif (9a) de ladite au moins une section saillante ou encastrée (9).

10. Moule selon l'une quelconque des revendications précédentes, comprenant des moyens d'interférence mécanique ou d'engagement (13a, 13b) desdites au moins deux parties mutuellement mobiles (10, 11) formées aux surfaces d'interface ou de couplage (IS1, IS2) respectives desdites au moins deux parties mutuellement mobiles (10, 11) l'une par rapport à l'autre ou entre elles.

11. Moule selon la revendication 10, dans lequel ladite interférence ou ledit engagement mécanique comprend au moins une projection (13a) dans ladite première (10) ou seconde (11) partie qui est en tout ou partie conique ou effilée en éloignement de la première (10) ou seconde partie (11) respective, ladite au moins une projection (13a) étant conçue pour s'engager, dans ladite position de moulage, un siège (13b) respectif dans l'autre seconde (11) ou première (10) partie, ledit siège (13b) étant partiellement conique ou avec une section décroissante vers l'intérieur de la seconde (11) ou de la première (10) partie respective.

12. Moule selon l'une quelconque des revendications précédentes, comprenant au moins un élément de charge élastique (15) conçu pour s'opposer au mouvement relatif desdites au moins deux parties mutuellement mobiles (10, 11) à partir de ladite position de moulage à ladite position d'extraction ou de désinsertion et conçu pour agir de manière à amener lesdites au moins deux parties mutuellement mobiles (10, 11) de retour ou vers ladite position de moulage.

13. Moule selon la revendication 12, dans lequel ledit au moins un élément de charge élastique (15) est conçu pour amener lesdites au moins deux parties mutuellement mobiles (10, 11) vers ladite position de moulage ou près de celle-ci, mais l'achèvement du mouvement de ladite position d'extraction ou de désinsertion vers ladite position de moulage ou, dans tous les cas, le verrouillage amovible desdites parties mutuellement mobiles (10, 11) dans ladite position de moulage s'effectue par l'engagement d'au moins l'une desdites deux coques extérieures (5, 6, 7) avec ladite au moins une section saillante ou encastrée (9) ou avec un segment ou secteur (9a) de celles-ci.

14. Moule selon l'une quelconque des revendications précédentes, dans lequel ledit moule comprend au moins un actionneur pour déplacer lesdites au moins deux parties mutuellement mobiles (10, 11) l'une par rapport à l'autre.

15. Moule selon la revendication 14, dans lequel ledit au moins un actionneur est conçu pour agir directement ou par l'intermédiaire d'un levier ou d'un élément pousseur respectif contre l'arrière de ladite seconde partie (11).

16. Moule selon l'une quelconque des revendications précédentes, comprenant un composant de poutre (16) pour déplacer ledit noyau ou composant intérieur (2) quand lesdites au moins deux coques (5, 6, 7) sont dans ladite au moins une position d'ouverture ou de retrait et dans lequel ladite portion de contrainte (4) comprend une section de connexion (17) audit composant de poutre (16), ladite section de connexion (17) s'étendant à partir de ladite au moins une section saillante ou encastrée (9) en éloignement de ladite portion de moulage (3).

17. Procédé de moulage, en particulier pour le moulage par injection ou par vulcanisation, d'une coque extérieure d'une chaussure de ski en utilisant un moule selon l'une quelconque des revendications précédentes, ledit procédé comprenant les étapes suivantes :
- disposer lesdites coques extérieures (5, 6, 7) dans ladite au moins une position d'ouverture ou de retrait,
- déplacer relativement ledit noyau ou composant intérieur (2) et lesdites coques extérieures (5, 6, 7), de sorte que ledit noyau ou composant intérieur (2) se trouve dans une zone entre lesdites coques extérieures (5, 6, 7),
- avec ledit noyau ou composant intérieur dans ladite position de moulage ou près de celle-ci, activer les moyens d'approche/de retrait afin d'amener lesdites au moins deux coques extérieures (5, 6, 7) dans ladite au moins une position fermée, de sorte que lesdites au moins deux coques extérieures (5, 6, 7) entourent toute la portion de moulage (3) et au moins une partie de ladite portion de contrainte (4) dudit noyau ou dudit composant intérieur (2) et s'engagent avec au moins une partie de ladite portion de contrainte (4) définissant avec ladite surface extérieure (3a) de ladite portion de moulage (3) un espace ou une empreinte (GI) pour mouler un composé ou un mélange afin d'obtenir une coque extérieure d'une chaussure de ski,
- injecter un composé ou un mélange dans ledit espace ou ladite empreinte (GI) après l'étape précédente ou disposer un composé ou un mélange sur ledit noyau ou composant intérieur (2) dans ladite position de moulage avant de déplacer lesdites coques extérieures (5, 6, 7) dans ladite position fermée,
- mouler ladite coque extérieure dans ledit espace ou ladite impression (GI) avec lesdites coques extérieures (5, 6, 7) dans ladite au moins une position fermée,
- amener lesdites coques extérieures (5, 6, 7) dans ladite au moins une position d'ouverture ou de retrait et détacher dudit noyau ou composant intérieur (2) la coque extérieure moulée dans ledit espace ou ladite empreinte (GI) suite au mouvement desdites parties mutuellement mobiles (10, 11) dans ladite position d'extraction ou de désinsertion,
dans lequel au moins l'une des coques extérieures (5, 6, 7) s'engage, en tout ou en partie, avec ladite au moins une section saillante ou encastrée (9) dans ladite position fermée.

18. Procédé selon la revendication 17, dans lequel l'achèvement du mouvement desdites parties mutuellement mobiles (10, 11) de ladite position d'extraction ou de désinsertion à ladite position de moulage ou, dans tous les cas, le verrouillage amovible desdites parties mutuellement mobiles (10, 11) dans ladite position de moulage est réalisé également ou uniquement en engageant au moins une des coques extérieures (5, 6, 7) avec ladite au moins une section saillante ou encastrée (9).
